# EUROPÄISCHE PATENTSCHRIFT

(11) **EP 3 469 017 B1**
(45) Veröffentlichungstag und Bekanntmachung des Hinweises auf die Patenterteilung: **12.07.2023**
(21) Anmeldenummer: 17727199.6
(22) Anmeldetag: 31.05.2017
(51) Int. Cl.: C08J 5/18, B32B 27/32, B32B 27/08

(54) **MANTELFOLIE**
COVER FILM
FILM DE LIAGE PÉRIPHÉRIQUE

(30) Priorität: 08.06.2016 DE 102016110570
(43) Veröffentlichungstag der Anmeldung: 17.04.2019
(73) Patentinhaber: RKW AGRI GMBH & CO. KG, 67227 Frankenthal (DE)
(72) Erfinder: PIAZZI, Jürgen, 64720 Michelstadt (DE); EUBELER, Jan Philip, 67229 Großkarlbach (DE); STEFFEN, Thomas, 37589 Kalefeld (DE); KUHLMANN, Benjamin, 37154 Northeim (DE)
(74) Vertreter: Busch, Tobias
(86) Internationale Anmeldenummer: PCT/EP2017/063092
(87) Internationale Veröffentlichungsnummer: WO 2017/211632

(56) Entgegenhaltungen:
- WO-A1-2008/155129
- WO-A1-2010/039687
- WO-A1-2011/076694
- WO-A2-2009/040129
- US-A1- 2006 210 740

## Beschreibung

Die Erfindung betrifft eine Mantelfolie zur Fixierung von Material beim Pressen von Rundballen.

Silage ist ein Futtermittel für Nutztiere, das in der Regel durch Milchsäuregärung konserviert ist. Auch nachwachsende Rohstoffe für Biogasanlagen können durch Silierung haltbar gemacht werden. Siliert werden können beispielsweise alle Grünfuttermittel, unter anderem Gras (Grassilage), Mais (Maissilage), Klee oder Getreide (als Ganzpflanzensilage).

In der Silageproduktion werden heutzutage entweder Flach- oder Fahrsiloverfahren angewendet oder Ballensilage bzw. Schlauchverfahren. Die Lagerung in Hochsilos hat stark an Bedeutung verloren.

Wickelballensilage hat in den letzten Jahren an Bedeutung gewonnen. Große Feld-Hof-Entfernungen sind für das Verfahren günstig, da die hohe Transportdichte der gepressten Ballen den Transportkostenanteil senkt.

Bei der Produktion von Silageballen sind der Pressvorgang und einen an den Pressvorgang sich anschließenden Wickelvorgang voneinander getrennt. Zunächst wird mit einer Ballenpresse das Material aufgerollt. Dies kann durch gummibesetzte Riemen (Presse mit variabler Kammer) oder durch Stahlrollen (Festkammerpresse) geschehen. Hat der Ballen eine bestimmte Größe erreicht, wird er bei herkömmlichen Verfahren mit Garn oder Netzen gebunden, bevor sich der hintere Teil der Presse öffnet und der Ballen herausfällt. Die Ballen haben meist einen Durchmesser von 120 bis 180 cm und sind in der Regel 120 cm breit. Die Masse kann bei Grassilageballen bis zu 1 Tonne betragen. Nach dem Pressvorgang können die Silageballen anschließend mit einem Ballenwickelgerät mit einer Folie umhüllt werden.

Die Erfindung betrifft eine Mantelfolie oder Netzersatzfolie, die bei dem Pressvorgang zum Fixieren des komprimierten Materials in der Ballenpresse zur Anwendung kommt. Anstelle des Netzes wird der Ballen bei diesem System bereits mit einer Ballenpresse in eine Folie gepresst. Nach dem Pressvorgang kann der Ballen dann noch mit einer weiteren Folie umwickelt werden, sodass ein Folie-Folie-System anstelle eines Netz-Folie-Systems zur Anwendung kommt. Solche Folie-Folie-Systeme weisen weniger Schimmelbefall und weniger Trockenmasseverlust auf. Zudem kann das Pflanzenmaterial höher verdichtet werden, als bei einer Netzwicklung. Statt der sonst üblichen Netze umschließt bei diesem System eine Folie die Mantelfläche des zylindrischen Ballens in seinem Umfang luft- und wasserdicht, wenn er die Presse verlässt. Ein weiterer Vorteil der in Folie gepressten Ballen besteht darin, dass die Silageballen mit einem schnellen Messerschnitt geöffnet werden können und keine Kunststofffasern auftreten, die sich am Futtermischwagen festsetzen oder in der Futterration auftauchen.

In der WO-2008/155129 A1 wird eine vorgestreckte Folie beschrieben, die als Netzersatz zum Wickeln von Ballen verwendet werden kann. Die Folie wird durch Strecken in Längsrichtung bis mindestens 60 % ihres Bruchdehnungsprozentsatzes hergestellt, sodass die Folie in Längsrichtung nur eine Dehnungsfähigkeit von maximal weiteren 180 % besitzt. Diese Folie ist sehr steif. Wenn die Folie beim Fixieren des gepressten Ballens weiter gestreckt wird, wird sie noch steifer und ist dadurch anfällig gegenüber mechanischen Beschädigungen. Aufgrund von mechanischen Beschädigungen können Feuchte und Sauerstoff eintreten und das Futtermittel verderben.

Die WO 2011/076694 beschreibt eine vorgestreckte Polyethylenfolie, die ein Längsstreckverhältnis von etwa 1:2 bis etwa 1:4 und ein Längsdehnungsvermögen von mindestens 190 % aufweist. Das Dehnungsvermögen umfasst eine elastische Komponente. Die Folie kann zum Umhüllen eines Ballens von komprimiertem Bulkmaterial verwendet werden.

Aufgabe der Erfindung ist es, eine Mantelfolie als Netzersatz für das Pressen von Ballen bereitzustellen, die eine kompakte Fixierung der Ballen ermöglicht und dabei eine hohe Qualität der Silage gewährleistet. Die Folie soll mit den marktüblichen Ballenpressen leicht zu verarbeiten sein. Weiterhin soll sich die Folie durch eine hohe Lebensdauer für die Silageanwendung und möglichst günstige Herstellungskosten auszeichnen. Die Folie soll ein einfaches Öffnen der Silageballen gewährleisten, wobei die Bildung von Kunststofffasern vermieden werden soll, die sich im Futtermischwagen festsetzen oder in der Futterration auftauchen können.

Diese und andere Aufgaben werden durch die erfindungsgemäße Folie gemäß Ansprüche 1-17 gelöst. Die Mantelfolie mit mindestens drei Schichten weist einen Anteil eines Copolymers in der inneren Schicht von mehr als 1 Gew.-%, vorzugsweise mehr als 2 Gew.-%, insbesondere mehr als 3 Gew.-% bezogen auf die gesamte Folie auf, wobei es sich als besonders günstig erweist, wenn der Anteil des Copolymers weniger als 40 Gew.-%, vorzugsweise weniger als 30 Gew.-%, insbesondere weniger als 25 Gew.-% bezogen auf die gesamte Folie beträgt.

Vorzugsweise handelt es sich bei dem Copolymer in der inneren Schicht um ein Plastomer bzw. ein thermoplastisches Elastomer, das die gummielastischen Eigenschaften eines Elastomers mit der Verarbeitbarkeit eines thermoplastischen Kunststoffs kombiniert. Dabei erweist es sich als günstig, wenn das Plastomer ein lineares α-Olefin (LAO) oder ein normales α-Olefin (NAO) ist. Gemäß der Erfindung handelt es sich um ein Ethylen-α-Olefin. Zur Copolymerisation mit dem Ethylen wird vorzugsweise ein α-Olefin aus der Gruppe 1-Hexen, 1-Hepten, 1-Octen, verwendet, wobei es sich als besonders vorteilhaft erweist, wenn das Plastomer dadurch gebildet wird, dass Ethen mit einem höheren α-Olefin, insbesondere 1-Buten oder 1-Hexen und/oder 1-Octen copolymerisiert wird. Besonders günstig erweist es sich dabei, wenn Ethen mit 1-Octen copolymerisiert wird.

Vorzugsweise ist das Plastomer ein Copolymer von Ethen mit einem isomeren linearen α-Olefin, wobei vorzugsweise das Plastomer ein Copolymer von Ethen und isomerem Octen ist. Bei einer besonders günstigen Ausführung der Erfindung ist das Plastomer ein Metallocen-katalysiertes Copolymer.

Als besonders günstig erweist es sich, wenn das Copolymer in einer Lösungspolymerisation mittels eines Metallocen-Katalysators hergestellt wird.

Erfindungsgemäß weist die Mantelfolie mindestens drei Schichten auf, wobei die äußeren Schichten keinen nennenswerten Anteil eines Copolymers aufweisen, vorzugsweise überhaupt kein Copolymer, insbesondere kein Plastomer, enthalten, wobei der Anteil unter 0,5 Gew.-%, insbesondere weniger als 0,1 Gew.-%, vorzugsweise weniger als 0,05 Gew.-% eines Copolymers beträgt.

Die erfindungsgemäße Mantelfolie zeichnet sich durch eine erhöhte Flexibilität aus. Erfindungsgemäß weist eine innere Schicht einen Anteil eines Copolymers von mehr als 5 %, vorzugsweise mehr als 8 %, insbesondere mehr als 10 % und/oder weniger als 50 Gew.-%, vorzugsweise weniger als 40 Gew.-%, insbesondere weniger als 35 Gew.-% auf. Gemäß der Erfindung weist eine mittlere Schicht einen nennenswerten Anteil eines Copolymers, insbesondere eines Plastomers, auf. Dadurch wird eine Mantelfolie als Netzersatz erschaffen, die einen elastischen und zugleich zähen Kern hat. Bei der Variante, bei der die äußeren Schichten keinen nennenswerten Anteil eines Elastomers aufweisen, wird erreicht, dass in den Außenschichten kein klebriger Effekt auftritt, sodass ein Verkleben auf der gewickelten Rolle bzw. ein Verblocken wirksam verhindert wird. Das α-Olefin, insbesondere wenn es sich dabei um ein 1-Octen handelt, begünstigt aufgrund seiner Doppelbindung die Reaktivität des Polymers und fördert somit die Bindung der Folienschicht zu benachbarten Schichten.

Gemäß der Erfindung wird die Mantelfolie bei einer Temperatur von mehr als 80°C, vorzugsweise mehr als 90°C, insbesondere mehr als 100°C verstreckt. Somit handelt es sich bei der Mantelfolie um eine warmverstreckte Folie. Durch diesen Warm-Reck-Prozess wird eine Orientierung der Polymerketten in Reckrichtung bewirkt. Als besonders günstig erweist es sich dabei, wenn die Folie in Längsrichtung verstreckt wird.

Bei einer Variante der Erfindung wird die Mantelfolie zunächst in einem Coextrusionsverfahren geblasen. Der dabei entstehende Folienschlauch wird längs aufgeteilt, wobei kein Verblocken stattfindet. Anschließend werden die erhaltenen Rollen einzeln in einer MDO-Anlage (Machine Direction Orientation) gereckt. Erfindungsgemäß wird die Folie vor dem Verstrecken mit einer Temperatur beaufschlagt, sodass ein Warmverstrecken stattfindet. Vorzugsweise findet eine monoaxiale Verstreckung statt. Alternativ kann auch eine biaxiale Folienreckanlage zum Einsatz kommen. Im Reckprozess wird die Folie zwischen Walzen mit unterschiedlichen Geschwindigkeiten verstreckt.

Als besonders günstig erweist es sich dabei, wenn die Temperatur beim Verstrecken weniger als 150°C, vorzugsweise weniger als 140°C, insbesondere weniger als 130°C beträgt.

Erstaunlicherweise wurde festgestellt, dass die Mantelfolie besonders günstige Eigenschaften aufweist, wenn sie in einem Temperaturbereich verstreckt ist, bei der zumindest ein Copolymer im schmelzflüssigen Zustand vorliegt. Dabei erweist es sich als besonders günstig, wenn die übrigen Polymerkomponenten der Folie im nicht schmelzflüssigen Zustand vorliegen.

Vorzugsweise wird das Verstrecken bei einer Temperatur in der Nähe des Kristallitschmelzpunktes der Folie durchgeführt. Insbesondere erweist es sich dabei als günstig, wenn die Mantelfolie in einem Temperaturbereich verstreckt ist, der zwischen 40°C und 5°C unterhalb des Kristallitschmelzpunktes der Folie liegt.

Bevorzugt erfolgt die Erwärmung der Ausgangsfolienbahn über einen Heizzylinder. Bei einer besonders günstigen Variante der Erfindung findet das Verrecken in einem Temperaturbereich statt, zwischen 30°C und 10°C unterhalb des Kristallitschmelzpunktes der Folie, insbesondere in einem Bereich zwischen 25°C und 15°C unterhalb des Kristallitschmelzpunktes der Folie.

Bekanntlich besitzen Polymere keinen scharf definierten Schmelzpunkt, sondern einen Schmelzbereich, wobei sich jedoch in den kristallinen Bereichen eines Polymers ein Kristallitschmelzpunkt zuordnen lässt. Dieser Kristallitschmelzpunkt liegt stets höher als der Schmelzpunkt oder der Schmelzbereich der nicht-kristallinen Bestandteile. Der schmelzflüssige Zustand ist dadurch beschrieben, dass das Schubmodul gegen null geht. Im Falle von Polymeren mit kristallinen Bereichen sind letztere dann nicht mehr nachweisbar.

Das Schubmodul kann beispielsweise nach ISO 6721-1 & 2 bestimmt werden. Die erfindungsgemäße Mantelfolie wird in einem Temperaturbereich verreckt, bei der die Molekularbewegung bereits thermisch aktiviert bzw. begünstigt ist. Somit können sich die Molekülketten gegeneinander verschieben ohne zu reißen. Weiterer Effekt dieser Temperatureinbringung ist eine Verringerung der Einschnürung infolge der auf die Folie ausgeübten Spannung. Anschließend wird die Orientierung der Folie bei gleichbleibender Temperatur und Spannung fixiert und dann die Folie rapide heruntergekühlt.

Bei einer bevorzugten Variante der Erfindung weist die Mantelfolie Rückstellkräfte zu einer weiteren Kompression des gewickelten Ballens auf. Die Erfindung umfasst somit auch ein Verfahren zum Pressen von Material, bei dem das Material in einer Kammer zu einem Ballen komprimiert wird und die erfindungsgemäße Mantelfolie weiter gestreckt wird. Die Folie wird anschließend unter Spannung in direktem Kontakt mit komprimiertem Bulkmaterial um den Ballen angebracht und unter Spannung mindestens 1,5, vorzugweise 2, insbesondere 2,5 Umdrehungen um den Ballen gewickelt. Durch die Verwendung der erfindungsgemäßen Folie tritt bei der Entfernung des Ballens aus der Kammer weitgehend keine Expansion des Ballens auf.

Bei einer besonders günstigen Variante der Erfindung wird durch die Folie sogar eine weitere Komprimierung erreicht. Dabei erweist es sich als besonders günstig, wenn die weitere Kompression mindestens 0,5 %, vorzugsweise 1 %, insbesondere 1,5 % des Durchmessers im Vergleich zum Durchmesser erreicht wird, mit der der Ballen die Presskammer verlässt. Der Ballen verlässt die Presskammer üblicherweise mit einem Durchmesser, der etwas über dem theoretischen Durchmesser der Presskammer liegt. Somit werden durch die Verwendung der erfindungsgemäßen Folie kompaktere Ballen gegenüber einem Pressen in einem Netz bzw. gegenüber herkömmlichen Mantelfolien erreicht.

Erfindungsgemäß wird die Mantelfolie in einem ausgewählten Temperaturbereich vorgestreckt. Üblicherweise handelt es sich dabei um ein monoaxiales Verstrecken in Längsrichtung (MDO).

**Gemäß** der Erfindung weist die Folie mindestens drei Schichten auf, wobei vorzugsweise mindestens eine innere Schicht einen nennenswerten Anteil eines Copolymers, insbesondere eines Plastomers, enthält.

Als vorteilhaft erweist es sich, wenn die Dicke der Folie weniger als 20 µm insbesondere weniger als 18 µm, insbesondere weniger als 16 µm beträgt.

Die erfindungsgemäße Folie wird vorzugsweise nach folgenden Schritten hergestellt:
- Blasextrusion zu einem Folienschlauch,
- Aufteilung des Schlupffolienschlauchs,
- Verstreckung in einer MDO-Anlage in Längsrichtung bei einer Temperatur, die in einem Bereich zwischen 40° unterhalb des Kristallitschmelzpunktes und 5°C unterhalb des Kristallitschmelzpunktes liegt.

Die erfindungsgemäße Folie ermöglicht ein leichtes Öffnen auch von gefrorenen Ballen mit dem Ballenschneider bzw. -greifer, so dass kein Absteigen vom Traktor notwendig ist, um das Netz vom gefrorenen Futter zu trennen. Sie gewährleistet eine höhere Folienstabilität an der Mantelfläche zum besseren mechanischen Schutz bei der Lagerung und beim Transport. So entstehen formstabile ummantelte Silageballen. Es sind keine zusätzlichen Klebeadditive erforderlich um ein störungsfreies Wickeln zu gewährleisten.

Die erfindungsgemäße Folie ist geeignet für die Erntelagerung im Agrarbereich beispielsweise von Häckselmais, Zuckerrübenschnitzel, Mischfutter, Biertreber oder Grassilage. Weiterhin ist die erfindungsgemäße Folie effektiv einsetzbar bei Sonderanwendungen von geschreddertem Kunststoffmüll oder zerkleinertem Hausmüll. Die Folie ist einsetzbar in allen stationären und mobilen Rundballen-Kombipressen mit Folienzuführung. Dabei kann sowohl eine Edge-to-Edge als auch eine Over-the-Edge Performance zur Anwendung kommen.

Weitere Merkmale und Vorteile der Erfindung ergeben sich aus der Beschreibung eines Ausführungsbeispiels anhand von Zeichnungen und aus den Zeichnungen selbst.

Dabei zeigt:
- Figur 1: eine Schnittdarstellung durch eine erfindungsgemäße Mantelfolie,
- Figur 2: ein Verfahrensschema zur Blasextrusion,
- Figur 3: ein Verfahrensschema einer Anlage zum Recken der Folie (MDO-Anlage),
- Figur 4: ein DSC-Diagramm einer Probe der Folie,
- Figur 5: eine Ballenpresse mit einem gepressten Balle in Mantelfolie.

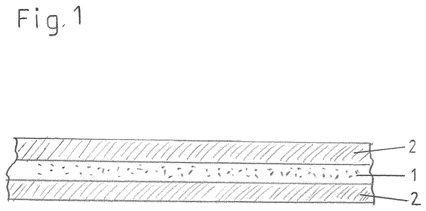

Figur 1 zeigt eine Schnittdarstellung durch eine Variante einer erfindungsgemäßen Mantelfolie. Bei der Folie handelt es sich um eine koextrudierte, mehrschichtige Blasfolie. Erfindungsgemäß enthält eine innere Schicht 1 einen nennenswerten Anteil eines Copolymers, insbesondere eines Plastomers. Bei dem Copolymer handelt es sich im Ausführungsbeispiel um ein metallocen-katalysiertes Copolymer von Ethen und 1-Octen. Das Ethen/1-Octen-Copolymer liegt mit einem Anteil von 25 Gew.-% in der inneren Schicht 1 vor und hat eine Dichte von 0,902 g/cm³. Die Schicht umfasst weiterhin einen Anteil von 75 % eines linearen Polyethylens niedriger Dichte (LLDPE) mit einer Dichte von 0,931 g/cm³ und einem Schmelzpunkt von 127°C. Der Anteil des Copolymers bezogen auf die gesamte Folie beträgt 15 Gew.-%.

Die beiden äußeren Schichten 3 umfassen kein Copolymer, insbesondere kein Plastomer. Sie bestehen zu 69 Gew.-% aus einem LLDPE mit einer Dichte von 0,923 g/cm³, zu 30 Gew.-% aus einem Polyethylen mit einer Dichte von 0,925 g/ cm³ und zu 1 Gew.-% aus einem Verarbeitungshilfsmittel-Masterbatch.

Die Dicke der Folie beträgt im Ausführungsbeispiel 15 µm.

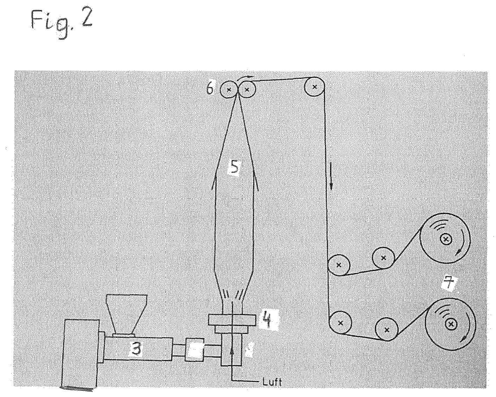

Figur 2 zeigt eine erste Stufe des Verfahrens zur Herstellung der Mantelfolie. Bei dieser ersten Stufe wird eine Blasextrusion durchgeführt. Die aus einem Extruder 3 austretende Schmelze wird durch eine Ringdüse 4 zu einem Schlauch geformt. Dieser wird durch Einblasen von Luft aufgeweitet.

Der Folienschlauch wird mit einer Geschwindigkeit abgezogen, die größer als die Austrittsgeschwindigkeit der Schmelze ist. Beim Unterschreiten der Schmelztemperatur in der Folie werden Dicke und Umfang des Schlauchs fixiert. An einer Einheit 5 passiert eine Flachlegung und Zusammenführung des Schlauchs zwischen zwei Rollen 6. Diese Abquetschwalzen verhindern, dass Luft in den flachgelegten Folienschlauch eindringt und ziehen gleichzeitig den Folienschlauch von der Düse ab. Anschließend wird der Schlauch aufgeschnitten und die so erhaltenen Folienstücke werden in einer Einheit 7 aufgewickelt. Der Folienschlauch wird bei dieser ersten Stufe des Verfahrens längs in vier Teile aufgeteilt. Es findet kein Verblocken statt.

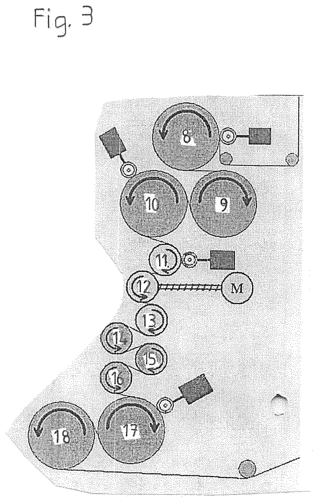

Figur 3 zeigt ein Verfahrensschema der zweiten Stufe des Verfahrens zur Herstellung der erfindungsgemäßen Mantelfolie. Dabei handelt es sich um eine MDO-Anlage mit Vorheitswalzen 8, 9 und 10, wobei die Walzen 8, 9 eine Temperatur von 105°C haben und die Walze 10 eine Temperatur von 108°C aufweist. Weiterhin umfasst die Anlage Reckwalzen 11 und 12, die sich mit unterschiedlicher Geschwindigkeit drehen und somit die Folie verstrecken. Die Reckwalze 11 dreht sich mit einer geringeren Drehzahl als die Reckwalze 12, sodass ein Streckverhältnis von ca. 2,5 : 1 bis 3 : 1 erreicht werden kann. Die Reckwalzen weisen eine Temperatur von 105 bis 108°C auf. Somit wird die Folie beim Verstrecken mit einer Temperatur beaufschlagt, die sich nahe dem Kristallitschmelzpunkt befindet.

An die Reckwalzen 11, 12 schließen sich Fixierwalzen 13, 14, 15, 16 an, die eine Temperatur von ca. 107°C aufweisen. Anschließend wird die Folie über Kühlwalzen 17, 18 stark heruntergekühlt. Die Kühlwalzen haben eine Temperatur von ca. 40°C.

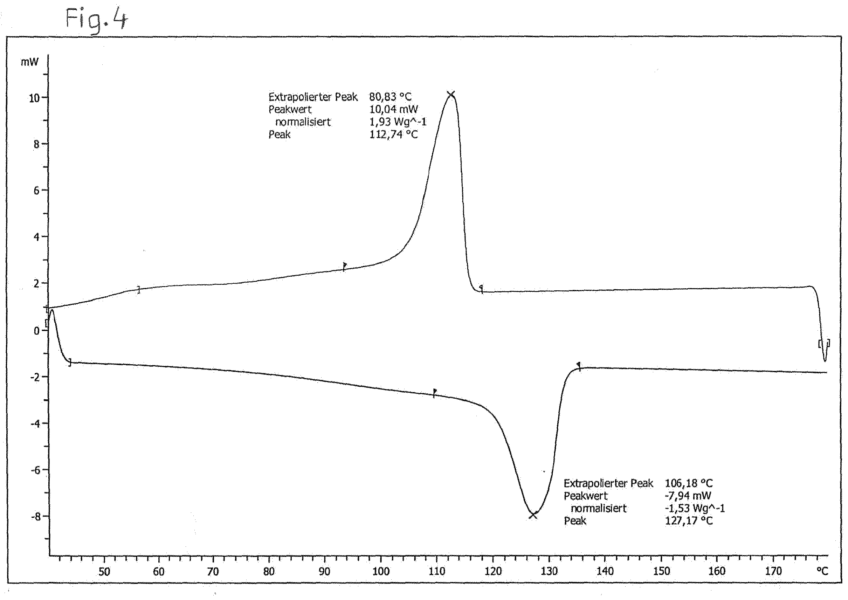

Figur 4 zeigt eine Auswertung einer DSC-Messung (Differential Scanning Calorimetry) einer Probe der Folie. Die dargestellten Peaks geben einen Hinweis auf die Schmelztemperatur der Folie. Die untere Kurve resultiert aus der Aufheizphase und die obere Kurve aus der Abkühlphase. Die in der Anlage für den Reckprozess eingestellte Temperatur liegt bei ca. 20°C unterhalb der Schmelztemperatur der Folie. In diesem Bereich ist die Molekularbewegung bereits thermisch aktiviert bzw. begünstigt. Somit können sich die Molekülketten gegeneinander verschieben ohne zu reißen. Weiterer Effekt dieser Temperatureinbringung ist eine Verringerung der Einschnürung infolge der auf die Folie ausgeübten Spannung.

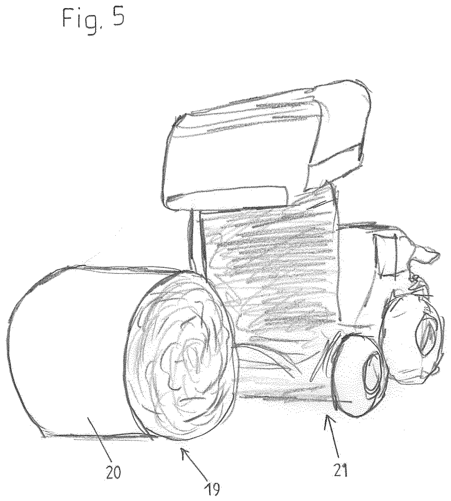

Figur 5 zeigt einen zylindrischen Rundballen 19, der an seiner Mantelfläche mit der erfindungsgemäßen Folie 20 umwickelt ist. Der Wickelvorgang findet in einer Ballenpresse 21 statt, wobei der in die Mantelfolie gepresste Ballen aus der Ballenpresse heraus auf das Feld fällt.

## Patentansprüche

1. Mantelfolie zum Pressen von Ballen, **dadurch gekennzeichnet, dass** die Mantelfolie mindestens drei Schichten aufweist und warmverstreckt ist bei einer Temperatur von mehr als 80 °C und eine innere Schicht (1) mit einem Copolymer eines ein Ethylen-α-Olefin umfasst, wobei zur Copolymerisation mit dem Ethylen ein α-Olefin aus der Gruppe 1-Buten, 1-Hexen, 1-Hepten, 1-Octen verwendet wird, wobei der Anteil dieses Copolymers mehr als 5 Gew.-% und weniger als 50 Gew.-% an der inneren Schicht (1) beträgt, wobei äußere Schichten (2) der Folie keinen nennenswerten Anteil dieses Copolymer aufweisen, wobei der Anteil dieses Copolymers in den äußeren Schichten unter 0,5 Gew.-% liegt.

2. Mantelfolie nach Anspruch 1, **dadurch gekennzeichnet, dass** der Anteil des Copolymers weniger als 40 Gew.-%, vorzugsweise weniger als 30 Gew.-%, insbesondere weniger als 25 Gew.-% beträgt.

3. Mantelfolie nach einem der Ansprüche 1 oder 2, **dadurch gekennzeichnet, dass** das Copolymer ein Plastomer ist.

4. Mantelfolie nach einem der Ansprüche 1 bis 3, **dadurch gekennzeichnet, dass** das Copolymer ein thermoplastisches Elastomer, insbesondere ein thermoplastisches Elastomer auf Olefinbasis ist.

5. Mantelfolie nach einem der Ansprüche 1 bis 4, **dadurch gekennzeichnet, dass** das Copolymer ein Copolymer von Ethylen mit einem (ω-1)-Methylverzweigten α-Olefin und/oder einem isomeren linearen α-Olefin ist.

6. Mantelfolie nach einem der Ansprüche 1 bis 5, **dadurch gekennzeichnet, dass** das Copolymer ein Copolymer von Ethen und isomerem Octen ist.

7. Mantelfolie nach einem der Ansprüche 1 bis 6, **dadurch gekennzeichnet, dass** das Copolymer ein metallocen-katalysiertes Copolymer ist.

8. Mantelfolie nach einem der Ansprüche 1 bis 7, **dadurch gekennzeichnet, dass** das Copolymer ein Metallocen-Polyolefin, insbesondere ein Metallocen-Polyethylen (mPE-LLD) mit einer Dichte zwischen 0,886 bis 0,935 g/cm³ ist.

9. Mantelfolie nach einem der Ansprüche 1 bis 8, **dadurch gekennzeichnet, dass** die innere Schicht (1) der Folie einen Anteil des Copolymers von mehr als 8 Gew.-%, insbesondere mehr als 10 Gew.-% aufweist.

10. Mantelfolie nach einem der Ansprüche 1 bis 9, **dadurch gekennzeichnet, dass** die innere Schicht (1) einen Anteil des Copolymers von weniger als 40 Gew.-%, insbesondere weniger als 35 Gew.-% aufweist.

11. Mantelfolie nach einem der Ansprüche 1 bis 10, **dadurch gekennzeichnet, dass** die Folie (20) bei einer Temperatur von mehr als 90°C, insbesondere mehr als 100°C verstreckt ist.

12. Mantelfolie nach einem der Ansprüche 1 bis 11, **dadurch gekennzeichnet, dass** die Mantelfolie (20) bei einer Temperatur von weniger als 150°C, vorzugsweise weniger als 140°C, insbesondere weniger als 130°C verstreckt ist.

13. Mantelfolie nach einem der Ansprüche 1 bis 12, **dadurch gekennzeichnet, dass** die Mantelfolie bei einer Temperatur verstreckt ist, bei der das Copolymer in schmelzflüssiger Form vorliegt.

14. Mantelfolie nach einem der Ansprüche 1 bis 13 **dadurch gekennzeichnet, dass** die Mantelfolie bei einer Temperatur verstreckt ist, bei der alle anderen Komponenten außer dem Copolymer in nicht schmelzflüssiger Form vorliegen.

15. Mantelfolie nach einem der Ansprüche 1 bis 14, **dadurch gekennzeichnet, dass** die Mantelfolie zwischen 5 und 20°C unterhalb des Kristallitschmelzpunktes der Folie verstreckt ist.

16. Mantelfolie nach einem der Ansprüche 1 bis 15, **dadurch gekennzeichnet, dass** die Folie Rückstellkräfte zu einer weiteren Kompression des gewickelten Ballens aufweist.

17. Mantelfolie nach einem der Ansprüche 1 bis 16, **dadurch gekennzeichnet, dass** die Dicke der Folie weniger als 20 µm, vorzugsweise weniger als 18 µm, insbesondere weniger als 16 µm beträgt.

18. Verfahren zum Herstellen einer Folie nach einem der Ansprüche 1 bis 17 mit folgenden Schritten:
- Blasextrusion zu einem Folienschlauch,
- Aufteilung des Folienschlauchs,
- Verstrecken in einer MDO-Anlage in Längsrichtung bei einer Temperatur, bei der mindestens ein Copolymer in schmelzflüssiger Form vorliegt und die übrigen Komponenten in nicht schmelzflüssiger Form.

19. Verwendung einer Folie nach einem der Ansprüche 1 bis 17 als Netzersatz zum Fixieren von komprimiertem Bulkmaterial beim Pressen eines Ballens.

20. Verwendung einer Rolle mit einer Folie nach einem der der Ansprüche 1 bis 17 als Netzersatz zum Fixieren von Material beim Ballenpressen.

## Claims

1. Cover film for the compressing of bales, **characterized in that** the cover film comprises at least three layers and is hot-stretched at a temperature of more than 80°C and comprises an inner layer (1) comprising a copolymer of an ethylene- α-olefin, wherein an α-olefin from the group of 1-butene, 1-hexene, 1-heptene, 1-octene is used for copolymerization with the ethylene, wherein the content of this copolymer is more than 5% by weight and less than 50% by weight of the inner layer (1), wherein outer layers (2) of the film comprise no significant content of this polymer, wherein the content of this copolymer in the outer layers is less than 0.5%.

2. Cover film according to Claim 1, **characterized in that** the content of the copolymer is less than 40 wt%, preferably less than 30 wt%, in particular less than 25 wt%.

3. Cover film according to either of Claims 1 or 2, **characterized in that** the copolymer is a plastomer.

4. Cover film according to any of Claims 1 to 3, **characterized in that** the copolymer is a thermoplastic elastomer, in particular an olefin-based thermoplastic elastomer.

5. Cover film according to any of Claims 1 to 4, **characterized in that** the copolymer is a copolymer of ethylene with an (ω-1)-methyl-branched α-olefin and/or an isomeric linear α-olefin.

6. Cover film according to any of Claims 1 to 5, **characterized in that** the copolymer is a copolymer of ethene and isomeric octene.

7. Cover film according to any of Claims 1 to 6, **characterized in that** the copolymer is a metallocene-catalyzed copolymer.

8. Cover film according to any of Claims 1 to 7, **characterized in that** the copolymer is a metallocene polyolefin, in particular a metallocene polyethylene (mPE-LLD) with a density of 0.886 to 0.935 g/cm³.

9. Cover film according to any of Claims 1 to 8, **characterized in that** inner layer (1) of the film comprises a content of the copolymer of more than 8 wt%, in particular more than 10 wt%.

10. Cover film according to any of Claims 1 to 9, **characterized in that** inner layer (1) comprises a content of the copolymer of less than 40 wt%, in particular less than 35 wt%.

11. Cover film according to any of Claims 1 to 10, **characterized in that** the film (20) is stretched at a temperature of more than 90°C, in particular more than 100°C.

12. Cover film according to any of Claims 1 to 11, **characterized in that** the cover film (20) is stretched at a temperature of less than 150°C, preferably less than 140°C, in particular less than 130°C.

13. Cover film according to any of Claims 1 to 12, **characterized in that** the cover film is stretched at a temperature at which the copolymer is in molten form.

14. Cover film according to any of Claims 1 to 13, **characterized in that** the cover film is stretched at a temperature at which all components other than the copolymer are in non-molten form.

15. Cover film according to any of Claims 1 to 14, **characterized in that** the cover film is stretched at between 5°C and 20°C below the crystallite melting point of the film.

16. Cover film according to any of Claims 1 to 15, **characterized in that** the film has restoring forces for further compression of the wrapped bale.

17. Cover film according to any of Claims 1 to 16, **characterized in that** the thickness of the film is less than 20 pm, preferably less than 18 pm, in particular less than 16 µm.

18. A method for producing a film according to any of Claims 1 to 17, with the following steps:
- blow extrusion to form a film tube,
- division of the film tube,
- stretching in an MDO unit in the longitudinal direction at a temperature at which at least one copolymer is in molten form and the remaining components are in non-molten form.

19. Use of a film according to any of Claims 1 to 17 as a net replacement for fixing of compressed bulk material in the compressing of a bale.

20. Use of a roll of a film according to any of Claims 1 to 17 as a net replacement for fixing material in baling.

## Revendications

1. Film enveloppant pour le pressage de balles, **caractérisé en ce que** le film enveloppant présente au moins trois couches et est étiré à chaud à une température de plus de 80 °C et comprend une couche interne (1) comportant un copolymère d'une éthylène-α-oléfine, dans lequel, pour la copolymérisation avec l'éthylène, une α-oléfine du groupe du 1-butène, 1-hexène, 1-heptène, 1-octène est utilisée, la proportion de ce copolymère étant supérieure à 5 % en poids et inférieure à 50 % en poids de la couche interne (1), des couches extérieures (2) du film ne présentant aucune proportion significative de ce copolymère, la proportion de ce copolymère dans les couches extérieures se situant en dessous de 0,5 % en poids.

2. Film enveloppant selon la revendication 1, **caractérisé en ce que** la proportion du copolymère est inférieure à 40 % en poids, de préférence inférieure à 30 % en poids, en particulier inférieure à 25 % en poids.

3. Film enveloppant selon l'une quelconque des revendications 1 ou 2, **caractérisé en ce que** le copolymère est un plastomère.

4. Film enveloppant selon l'une quelconque des revendications 1 à 3, **caractérisé en ce que** le copolymère est un élastomère thermoplastique, en particulier un élastomère thermoplastique à base d'oléfine.

5. Film enveloppant selon l'une quelconque des revendications 1 à 4, **caractérisé en ce que** le copolymère est un copolymère d'éthylène avec une α-oléfine ramifiée par méthyle en (ω-1) et/ou une α-oléfine linéaire isomérique.

6. Film enveloppant selon l'une quelconque des revendications 1 à 5, **caractérisé en ce que** le copolymère est un copolymère d'éthène et de l'octène isomérique.

7. Film enveloppant selon l'une quelconque des revendications 1 à 6, **caractérisé en ce que** le copolymère est un copolymère catalysé par un métallocène.

8. Film enveloppant selon l'une quelconque des revendications 1 à 7, **caractérisé en ce que** le copolymère est une polyoléfine de métallocène, en particulier un polyéthylène de métallocène (mPE-LLD) doté d'une densité comprise entre 0,886 et 0,935 g/cm³.

9. Film enveloppant selon l'une quelconque des revendications 1 à 8, **caractérisé en ce que** la couche interne (1) du film présente une proportion du copolymère de plus de 8 % en poids, en particulier plus de 10 % en poids.

10. Film enveloppant selon l'une quelconque des revendications 1 à 9, **caractérisé en ce que** la couche interne (1) présente une proportion du copolymère de moins de 40 % en poids, en particulier moins de 35 % en poids.

11. Film enveloppant selon l'une quelconque des revendications 1 à 10, **caractérisé en ce que** le film (20) est étiré à une température de plus de 90 °C, en particulier plus de 100 °C.

12. Film enveloppant selon l'une quelconque des revendications 1 à 11, **caractérisé en ce que** le film enveloppant (20) est étiré à une température de moins de 150 °C, de préférence moins de 140 °C, en particulier moins de 130 °C.

13. Film enveloppant selon l'une quelconque des revendications 1 à 12, **caractérisé en ce que** le film enveloppant est étiré à une température à laquelle le copolymère est présent sous forme fondue.

14. Film enveloppant selon l'une quelconque des revendications 1 à 13, **caractérisé en ce que** le film enveloppant est étiré à une température à laquelle tous les autres composants outre le copolymère sont présents sous forme non fondue.

15. Film enveloppant selon l'une quelconque des revendications 1 à 14, **caractérisé en ce que** le film enveloppant est étiré entre 5 et 20 °C en dessous du point de fusion de cristallite du film.

16. Film enveloppant selon l'une quelconque des revendications 1 à 15, **caractérisé en ce que** le film présente des formes de rappel pour une compression supplémentaire de la balle enroulée.

17. Film enveloppant selon l'une quelconque des revendications 1 à 16, **caractérisé en ce que** l'épaisseur du film est inférieure à 20 pm, de préférence inférieure à 18 pm, en particulier inférieure à 16 µm.

18. Procédé de préparation d'un film selon l'une quelconque des revendications 1 à 17 comportant les étapes suivantes :
- extrusion par soufflage en un film tubulaire,
- fractionnement du film tubulaire,
- étirage dans une installation MDO dans la direction longitudinale à une température à laquelle au moins un copolymère est présent sous forme fondue et les composants restants sous forme non fondue.

19. Utilisation d'un film selon l'une quelconque des revendications 1 à 17 en tant que remplacement de filet pour la fixation d'un matériau brut comprimé lors du pressage d'une balle.

20. Utilisation d'un rouleau comportant un film selon l'une quelconque des revendications 1 à 17 en tant que remplacement de filet pour la fixation d'un matériau lors d'un pressage de balles.
